# EUROPÄISCHE PATENTSCHRIFT

(11) **EP 0 839 855 B1**
(45) Veröffentlichungstag und Bekanntmachung des Hinweises auf die Patenterteilung: **28.01.2004**
(21) Anmeldenummer: 97118040.1
(22) Anmeldetag: 17.10.1997
(51) Int. Cl.: C08J 7/04, C09D 5/28

(54) **Oberflächenvergütung von Platten aus thermoplastischen Kunststoffen**
Surface finishing of sheets of thermoplastic material
Revêtement des surfaces de plaques en matière thermoplastique

(30) Priorität: 30.10.1996 DE 19643828
(43) Veröffentlichungstag der Anmeldung: 06.05.1998
(73) Patentinhaber: BAYER AG, 51368 Leverkusen (DE)
(72) Erfinder: Vogl, Herbert, 50737 Köln (DE); Röhner, Jürgen, 51063 Köln (DE); Hättig, Jürgen, Discovery Bay, Bayer (CN)

(56) Entgegenhaltungen:
- GB-A- 2 264 523
- PATENT ABSTRACTS OF JAPAN vol. 015, no. 396 (M-1166), 8.Oktober 1991 & JP 03 161329 A (TOYODA GOSEI CO LTD), 11.Juli 1991,
- DATABASE WPI Section Ch, Week 9350 Derwent Publications Ltd., London, GB; Class A25, AN 93-400524 XP002046102 & JP 05 302 062 A (DAINIPPON INK & CHEM KK) , 16.November 1993
- PATENT ABSTRACTS OF JAPAN vol. 096, no. 011, 29.November 1996 & JP 08 179780 A (NISSAN MOTOR CO LTD), 12.Juli 1996,

## Beschreibung

Gegenstand der Erfindung ist ein Verfahren zur Oberflächenvergütung von Platten aus thermoplastischen Kunststoffen. Derartige Platten werden im allgemeinen durch Extrusion des Kunststoffs aus Breitschlitzdüsen erzeugt. Das die Düse verlassende noch heiße Extrudat wird meist durch zwei bis vier Glättkalanderwalzen geführt, um seine Oberfläche zu glätten.

Es wurde gefunden, daß man die Oberfläche solcher extrudierten Platten vergüten kann, indem man unmittelbar nach Verlassen der Breitschlitzdüse auf die noch heißen Platten ein kugelförmiges Granulat aus thermoplastischem Polyurethan aufstreut, das Granulat anschmelzen läßt und durch eigenes Gewicht und/oder Druck durch die Glättkalanderwalzen in die Kunststoffoberfläche einpreßt. Man erzielt auf diese Weise eine rauhe Oberfläche, in der die Granulatkügelchen des thermoplastischen Polyurethans noch sichtbar und/oder als Erhöhungen fühlbar sind.

Als Plattenmaterial -sind im Prinzip alle thermoplastisch verformbaren Kunststoffe geeignet. Bevorzugt verwendet man Polystyrol, schlagfestes Polystyrol, ABS, Hart-PVC, TPU, Polycarbonat und Polypropylen. Als Beschichtungsmittel verwendet man handelsübliche thermoplastische Polyurethane in Form handelsüblicher Kugelgranulate mit Teilchen eines Durchmessers von ca. 0,3 bis ca. 5 mm oder Zylindergranulat, Linsengranulat, Würfelgranulat von ca. 1 bis 6 mm Durchmesser bzw. Kantenlänge.

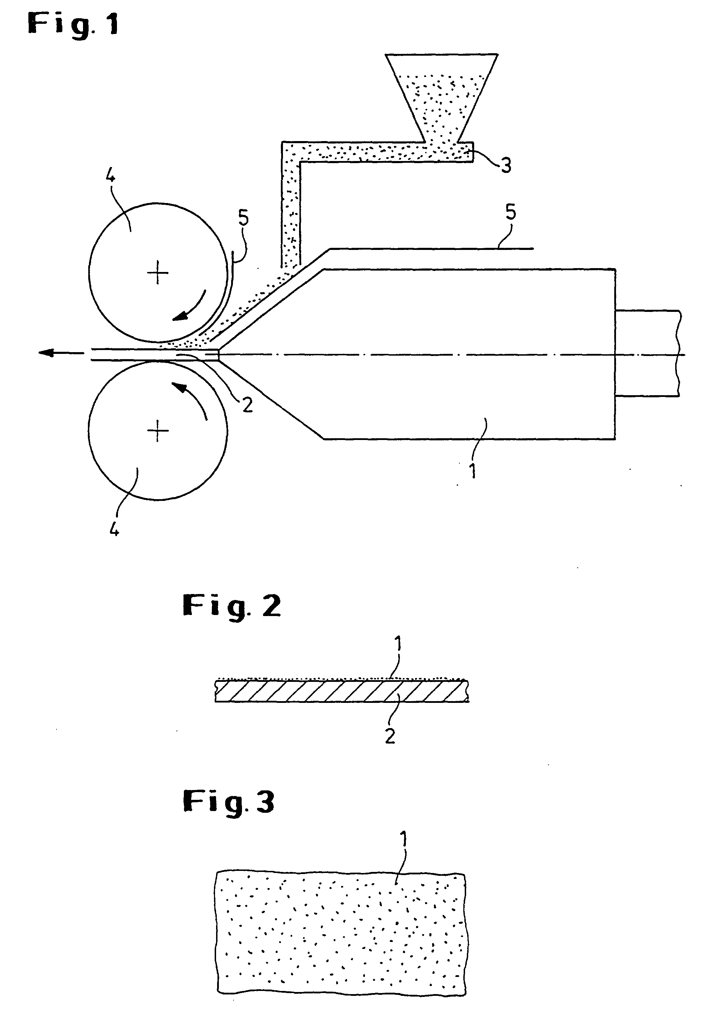

Die Durchführung des Verfahrens wird durch die Fig. 1 beispielhaft veranschaulicht. In dieser Figur bedeutet 1 die an einen Extruder angeschlossene Breitschlitzdüse, 2 die die Düse verlassende Kunststoffplatte, 3 eine Zuführungsvorrichtung für das Granulat aus thermoplastischem Polyurethan, 4 die Kalanderwalzen und 5 wärmeisolierende Leitbleche.

Auf die Kunststoffplatte 2 wird unmittelbar nach Verlassen der Breitschlitzdüse 1 das Granulat des thermoplastischen Polyurethans 3 aufgestreut. Das Extrudat ist zu diesem Zeitpunkt noch heiß, es hat praktisch noch die Extrusionstemperatur. Je nach Kunststoff liegt diese bei ca. 180 bis 280°C. Diese Temperatur reicht aus, um das aufgestreute Polyurethangranulat (Schmelzpunkt um 180°C) leicht anzuschmelzen, so daß sich ein Überzug bildet, welcher von separaten Teilchen bis zu einer geschlossenen Fläche gestaltet werden kann, die Körner aber noch sichtbar und als Erhebungen fühlbar bleiben. Die Platte wird dann durch die Glättkalanderwalzen geführt, wobei die Körnchen des thermoplastischen Polyurethans in die Oberfläche des Kunststoffs leicht eingepreßt werden. Auf diese Weise wird eine unlösbare Verbindung hergestellt.

Die fertige Platte zeigt schematisch die Fig. 2 (Seitenansicht) und die Fig. 3 (Aufsicht). In diesen Figuren bedeutet 1 das zugeführte Polyurethangranulat und 2 das Grundmaterial der Platte.

Man kann erfindungsgemäß jede Kunststoffplatte mit einer vergüteten Oberfläche versehen. Diese Oberfläche kann verschiedenartige Funktionen ausüben. So kann sie als Antirutschbeschichtung für Bodenbeläge, Förderelemente oder durch Tiefziehen hergestellte Gebrauchselemente (Duschwannen, Kofferschalen, Ablageschalen, Griffe) dienen. Sie kann aber auch zur Verbesserung der Kratzfestigkeit oder Verschleißfestigkeit, zur Erhöhung der Kälteschlagfestigkeit, zur Geräuschdämpfung und zur Veränderung der Haptik benutzt werden. Daneben kann diese Beschichtung auch eine dekorative Funktion haben. Man kann mit farbigen Granulaten Farbeffekte und Reflexeffekte erzielen oder mit Hilfe einer geeigneten Streuvorrichtung sogar bildmäßige Anordnung.

Darüber hinaus kann man als thermoplastisches Polyurethan Materialien verwenden, welche Schmelzklebereigenschaften haben, wie z.B. Texin DP-7-1114 oder Desmocoll 530, Desmocoll 540. (Bayer AG) Es ist dann möglich, die Platte nach Wiedererwärmen mit anderen Materialien, beispielsweise Textilien, zu kaschieren oder mit Geweben zu belegen und in einem Arbeitsgang nach Anwärmung tiefzuziehen (Thermoformen).
**Ausführungsbeispiel:**
Herstellung von Kompaktplatten aus ABS mit TPU-Kugelgranulat als Oberflächenvergütung
**Versuchsaufbau**
- Hauptextruder: Reifenhäuser RH 70
- Durchmesser = 70 mm
- Schneckenlänge 33 D, mit Entgasung
- Plattendüse 350 mm Düsenbreite mit Staubalken und Flexlippe
- eingestellter Lippenspalt = 5 mm
- 3-Walzenkalender, vertikale Walzenanordnung

**Verarbeitungsparameter**
Temperatureinstellung (°C)

| Extruder |
|---|
| Z1 =220 |
| Z2 = 220 |
| Z3 = 220 |
| Z4 = 230 |
| Z5 = 240 |
| |
| Anschlußteile = 250 |
| Düse = 265 |

**Eingesetzte Materialien**
Handelsübliches ABS (Novodur P2KE, natur, Bayer AG)
Kugelgranulat aus thermoplastischem Polyurethan (Texin DP-7-1114 Kugelgranulat, natur, Kugeldurchmesser ca. 0,6-0,8 mm, Bayer AG)
**Plattenabmessungen**

| |
|---|
| Breite = 350 mm |
| Dicke = 4 mm |

**Messwerte**

| | |
|---|---|
| Massedruck bar | 142 |
| Temperatur °C | 257 |
| Drehzahl l/min | 51 |
| Strom A | 50 |

**Walzentemp.**

| |
|---|
| oben = 70°C |
| Mitte = 50°C |
| unten = 70°C |

**Gesamtdurchsatz:** ca. 50 kg/h Kugelgranulat ca. 3 kg/h
**Abzugsgesch.**= 0,5 min

### Vorgehensweise

Es wurde zunächst eine ABS-Kompaktplatte, ohne Oberflächenvergütung, in bestmöglicher Qualität ohne sichtbaren Wulst hergestellt. Danach wurden die Walzenspalten um weitere 0,3 mm geöffnet.

Das TPU-Kugelgranulat wurde ohne Vorbehandlung mittels Rüttelrinne und Zulaufblechen gleichmäßig auf die Schmelze aufgebracht. Über die Vibrationsintensität der Rüttelrinne wurde die Kugelzufuhr so dosiert, daß bei einer etwa halbgeschlossenen Plattenoberfläche 49 g Kugelgranulat/min. aufgetragen wurde (Δ 55 Kugel/cm²).

Die Leitbleche sind ausreichend isoliert, damit sie sich nicht durch die Abstrahlungswärme von Schmelze oder Kalanderwalzen aufheizen und dadurch die gleichmäßige Granulatzufuhr aufgrund von Anschmelzungen behindert wird.

Aus der so beschichteten Platte wurde durch Thermoformen eine Ablageschale für eine Automobilkonsole geformt.

| | | | |
|---|---|---|---|
| Oberflächentemperatur | 160°C | Aufheizzeit | 90 sec. |
| Werkzeugtemperatur | 80°C | Kühlzeit | 60 sec. |

Die so hergestellte Ablageschale bietet sehr guten Geräusch- und Kratzschutz bei abgelegten Metallteilen wie Münzen, Schlüsseln, Feuerzeugen und Antirutscheigenschaften bei z.B. abgestellten Getränkedosen, Trinkbechern etc.

## Patentansprüche

1. Verfahren zum Vergüten der Oberfläche von extrudierten Platten aus thermoplastischen Kunststoffen bei ihrer Herstellung durch Extrusion aus Breitschlitzdüsen, **dadurch gekennzeichnet, daß** man unmittelbar nach Verlassen der Breitschlitzdüse auf die noch heiße Kunststoffplatte ein Kugelgranulat eines thermoplastischen Polyurethans aufstreut, dieses anschmelzen läßt und durch eigenes Gewicht und/oder Druck durch die Glättkalanderwalzen in die Oberfläche des Kunststoffs einpreßt.

## Claims

1. Process for finishing the surface of extruded sheets of thermoplastics during the production thereof by extrusion through slot dies, **characterised in that** spherical thermoplastic polyurethane pellets are sprinkled onto the still hot plastic sheet immediately after it leaves the slot die, the pellets are allowed partially to fuse and pressed into the plastic surface under their own weight and/or pressure from the polishing calender rolls.

## Revendications

1. Procédé de revêtement de la surface de plaques extrudées en matières plastiques thermoplastiques lors de leur fabrication par extrusion dans des filières plates, **caractérisé en ce que**, immédiatement après la sortie de la filière plate, on saupoudre sur la plaque de matière plastique encore chaude un granulé en forme de billes de polyuréthanne thermoplastique, on laisse fondre celui-ci et on le presse dans la surface de la matière plastique sous l'action de son propre poids et/ou de la pression des cylindres de calandrage de lissage
